# EUROPÄISCHE PATENTSCHRIFT

(11) **EP 1 380 379 B1**
(45) Veröffentlichungstag und Bekanntmachung des Hinweises auf die Patenterteilung: **20.02.2008**
(21) Anmeldenummer: 03008516.1
(22) Anmeldetag: 12.04.2003
(51) Int. Cl.: B23K 26/04, B23K 26/24

(54) **Anordnung und Verfahren zur Regelung der Nahtlage eines laserstrahlgefügten Profils**
Device and process for regulating the seam position of laser beam joined profile
Dispositif et procédé de régulation de la position du cordon d'un profil joint par faisceau laser

(30) Priorität: 09.07.2002 DE 10234242
(43) Veröffentlichungstag der Anmeldung: 14.01.2004
(73) Patentinhaber: Airbus Deutschland GmbH, 21129 Hamburg (DE)
(72) Erfinder: Schumacher, Jörg, Dr.-Ing., 27308 Kirchlinteln (DE)
(74) Vertreter: Hansmann, Dierk

(56) Entgegenhaltungen:
- EP-A- 1 197 287
- DE-A1- 4 216 643
- PATENT ABSTRACTS OF JAPAN Bd. 009, Nr. 070 (M-367), 30. März 1985 (1985-03-30) & JP 59 202179 A (NIPPON KOKAN KK <NKK>), 15. November 1984 (1984-11-15)
- PATENT ABSTRACTS OF JAPAN Bd. 017, Nr. 080 (M-1368), 17. Februar 1993 (1993-02-17) -& JP 04 279289 A (FURUKAWA ELECTRIC CO LTD : THE), 5. Oktober 1992 (1992-10-05)
- PATENT ABSTRACTS OF JAPAN Bd. 017, Nr. 493 (M-1475), 7. September 1993 (1993-09-07) -& JP 05 123866 A (FANUC LTD), 21. Mai 1993 (1993-05-21)

## Beschreibung

Die Erfindung betrifft eine Anordnung zur Regelung der Nahtlage eines laserstrahlgefügten Profils gemäß dem Oberbegriff des Anspruch 1 (siehe, z.B., DE 42 16 643 A1). Ein entsprechendes Verfahren ist im Anspruch 12 definiert.

Eine ausgewogene Einflussnahme auf den Nahtflankenwinkel α einer laserstrahlgeschweißten Schweißnaht, dessen schweißtechnische Umsetzung sich am fertigen Schweißteil feststellen läßt, wird erst bei der Beurteilung der Laserschweißnaht hinsichtlich deren qualitätsgerechten Ausführung, die oftmals nicht den Erwartungen entsprechen wird, offenbart. Deshalb wird eine intensive Beobachtung des Nahtflankenwinkel α beim Laserstrahlschweißen von beispielsweise einer Stringer-Haut-Anordnung betrieben, um die Ausschussquoten der lasergeschweißten Teile, deren Laserschweißnähte mit der Fachwelt bekannten Laserschweiß-Anlagen umgesetzt werden, in Grenzen zu halten. Oftmals lässt sich das Nachschweißen der Schweißteile nicht vermeiden, wodurch die technologischen Einzelkosten für ein fertiges Schweißteil angehoben werden. Nachschweißungen werden an einem bereits lasergeschweißten Teil vorgenommen, wenn der Nahtflankenwinkel α außerhalb der zulässigen Toleranz liegt.

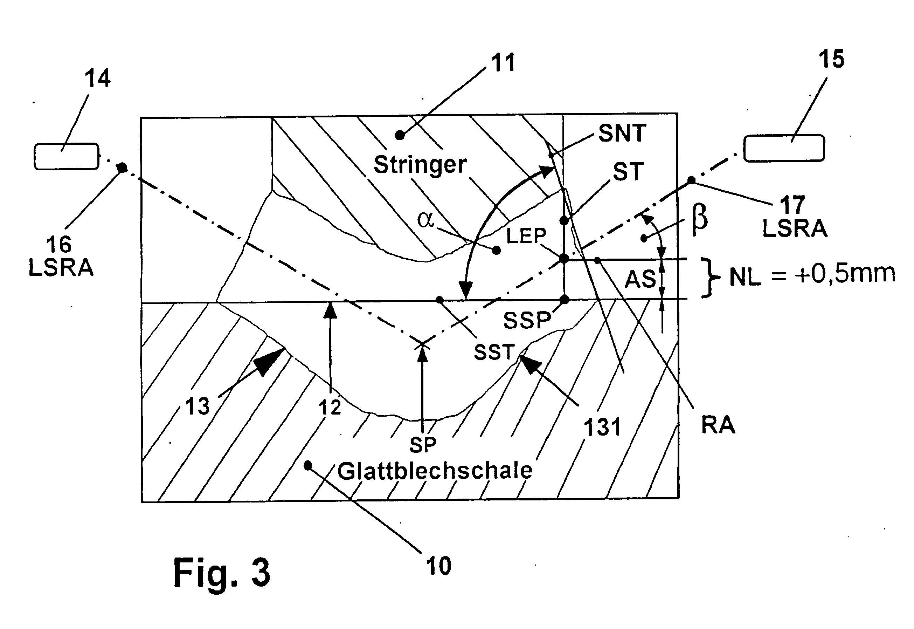

Der Nahtflankenwinkel α wird beim Laserschweißen von Schweißteilen (beispielsweise einer Stringer-Haut-Anordnung) als eine wesentliche Ausgangsgröße angesehen, dessen Einfluß auf die qualitative Ausführung einer Laserschweißnaht am fertigen Schweißteil an sich bekannt ist. Seine Bewertung wird traditionell erst nach der Ausführung der vollständig gezogenen Schweißnaht vorgenommen. Lösungen, mit denen eine direkte Einflussnahme auf den Schweißvorgang, der eine gebotene Veränderung des Nahtflankenwinkel α realisiert, ausgeübt wird, um eine qualitativ akzeptable Schweißnaht zu erzielen, sind nicht bekannt. Dabei werden hauptsächlich Schweißteile betrachtet, bei denen beispielsweise der Stringer lotrecht stehend auf der Haut, die Fachkreise auch als "Glattblechschale" bezeichnen, positioniert wird. Der Nahtflankenwinkel α resultiert aus der Position des Laserstrahls und dessen relative Lage zum Schweißstoß der Fügeteile, beispielsweise dem Haut-Stringer-Stoß. Der Nahtflankenwinkel α liegt demnach zwischen der Haut und der Oberfläche der Schweißnaht, dessen Lage - mit einem vorgreifenden Blick auf die beigegebene Fig. 3 - anschaulicher wird. Insofern wird die Nahtlage und in Korrelation der zu erwartende Nahtflankenwinkel α der fertigen Schweißnaht schon vor Beginn des Schweißprozesses beeinflusst.

Bisher wird die Position des Laserstrahls relativ zum Schweißstoß der Teile (Haut-Stringer-Stoß) fest vorgegeben, bevor die Laserschweißung durchgeführt wird. Mit einer derartigen Vorbereitung werden natürlich an eine (theoretisch erwartete) Nahtlage respektive an einen Nahtflankenwinkel α der geschweißten Naht entsprechende Erwartungen geknüpft.

Wenn man bedenkt, dass außerdem unvorhersehbare Störungen, die ggf. durch Verzug oder Verkippen der Schweißteile, bspw. des Stringers auf der Haut, durch Veränderung der Lagetoleranzen des Laserstrahls, durch nicht beachtete Toleranzen der Bauteildicke (Stringerdicke), oder durch Toleranzen wegen Torsion und Verbiegen des Bauteils (Stringers) durch eine Rollenführung, und auch durch Toleranzen eines taktilen optischen Sensors zur Erfassung des Stoßes verursacht werden, also auf den Schweißprozess während seiner Durchführung einen unbeabsichtigten Einfluß ausüben, dann ist keine weitere Möglichkeit bekannt, nach der man während der stattfindenden Laserschweißung einen maßgeblichen Einfluss auf die Gestaltung der Nahtlage oder auf die Schwankungen des Nahtflankenwinkels α ausüben kann, um eine ansprechende Bauteilqualität der lasergeschweißten Teile zu erreichen.

Die Einhaltung der vorgegebenen Grenzen für den Nahtflankenwinkel α ist insbesondere bei sphärischen Hautfeldern problematisch, zumal auch ein hoher Zeitaufwand für die Justage an jedem Stringer nicht selten ein Nachschweißen erschweren wird.

Gewöhnlich wird nach geschehener Laserschweißung der Fügeteile (beispielsweise der Haut-Stringer-Verbindung) mit einem bekannten Lichtschnittverfahren (mittels Lichtlinienprojektion) eine optische Vermessung, beispielsweise mit einem bekannten Lichtschnittsensor (sogenannten Falldorf-Sensor) der Fa. Falldorf & Co. GmbH (Falldorf & Co. GmbH, Consulting & Engineering, Fahrenheitstraße1, 28359 Bremen oder Internet unter: http://www.falldorf.de) vorgenommen und die lasergeschweißte Verbindung entsprechend den Anforderungen an die Nahtgüte bewertet. Mit einer dermaßen vorbereiteten Schweißanordnung wird die theoretisch erwartete Nahtlage respektive der erwartete Nahtflankenwinkel α einer Laserschweißnaht unter Eingehung bekannter Erfahrungswerte ermittelt und dieser Vorgabe zugrunde gelegt. Mit dieser Maßnahme kann der Schweißprozess während seines Ablaufs nicht positiv beeinflusst werden, weil keine Regelung der Nahtlage respektive des Nahtflankenwinkels α erfolgt.

Auch wird bisher ein mechanischer Sensor verwendet, welcher die Position des Stoßes (Stringer-Haut-Stoßes) mit einem Vorlaufabstand zum Schweißpunkt erfasst und die einst vorgegebene Nahtlage korrigiert. Diese Anordnung wird erfahrungsgemäß nicht immer zu akzeptablen Nahtflankenwinkeln α führen. Die vorgenannten Störgrößen können damit nicht ausreichend kompensiert werden.

Außerdem ist aus der Druckschrift: "DE 42 16 643 A1", insbesondere aus den dortigen Figuren 2, 8 und 22, eine vergleichbare Anordnung zur Regelung der Nahtlage eines laserstrahlgefügten Profils bekannt, nach der zu fügende Teile, von denen die Stirnfläche eines Fügepartners rechtwinklig auf die Oberfläche des Profils stößt, beiderseitig des Fügepartners randseitlich am Schweißstoß durch zwei mit jeweils einem Laserstrahl geschweißte Schweißnähte zu einem Schweißteil vereinigt sind.

Der Winkel, unter dem die Laserstrahlen auf die Werkstückaußenfläche treffen und der die Nahtlage beeinflusst, wird hierbei in Abhängigkeit des Messergebnisses eines Messinstrumentes geregelt [vgl. DE 42 16 643 A1; Figur 7 in Verbindung mit Spalte 9, Zeilen 30 ff.]. Folglich ist die dortige Anordnung offensichtlich aus mehreren seriell angeordneten und informationstechnisch verbundenen Anlagenkomponenten, insbesondere einer Nahtlage-Komponente zur Veränderung der Nahtlage, einer Laserschweiß-Prozess-Komponente mit zwei integrierten Laserschweißquellen sowie einer Nahtlagen-Regeleinrichtung aufgebaut. In der Nähe der Laserschweiß-Prozess-Komponente ist zudem eine Sensoreinrichtung zur Erfassung charakteristischer Größen der Laserschweißnaht angeordnet, die, insbesondere im Falle des Sensors, nachlaufend der mit Schweißgeschwindigkeit sich bewegenden Laserschweißquellen angeordnet ist [vgl. DE 42 16 643 A1; Anspruch 12]. Außerdem ist die Sensoreinrichtung mit der Nahtlagen-Regeleinrichtung informationstechnisch verbunden [vgl. DE 42 16 643 A1; Figur 8 in Verbindung mit Spalte 9, Zeilen 42 ff. sowie Figur 22 in Verbindung mit Spalte 12, Zeilen 10 ff.], welche die signalgewahdelten Sensor-Informationen aufnimmt. Hierbei ist die Nahtlagen-Regeleinrichtung intern offensichtlich mit einer Schaltung ausgestattet, die einen Informationsvergleich der während des Schweißvorganges zugeführten, schaltungsextern bezogenen Sensor-Informationen mit einer Sollgrößen-Information umsetzt und nach einem Informationsvergleich aus dem Vergleichsergebnis eine Regelgröße für die Prozessparameter generiert, welche am Ausgang der Nahtlagen-Regeleinrichtung bereitgestellt und der Nahtlage-Komponente zur Veränderung der Nahtlage zugeführt wird.

JP 59202179 zeigt eine automatische Lichtbogen-Schweißmethode. Falls ein Nahtflankenwinkel nicht einem Referenzwert entspricht, wird dieser mittels eines Korrekturantriebs nachjustiert. Ebenso zeigt JP 04279289 ein Stoßschweißverfahren, bei der ein Einstrahlwinkel θ eines Schweißstrahls in vorbestimmten Winkelbereichen gehalten wird.

Aus diesem Stand der Technik lassen sich keine Hinweise und Anregungen auf eine Anordnung zur Regelung der Nahtlage eines laserstrahlgefügten Profils mit einer Sensoreinrichtung zur Erfassung des Nahtflankenwinkels erkennen.

Demzufolge liegt der Erfindung die Aufgabe zugrunde, eine Anordnung und ein Verfahren zur Regelung der Nahtlage eines laserstrahlgefügten Profils aufzuzeigen, mit der die Position und / oder die Lage einer Laserschweißquelle während des Schweißvorganges dermaßen beeinflusst wird, dass durch geregelte Einflussnahme auf die Nahtlage und den Nahtflankenwinkel α der erzeugten Schweißnaht dessen Oberflächengeometrie verbessert wird. Dabei wird angestrebt, dass mit der Anordnung bereits geringe Schwankungen des Nahtflankenwinkels α ausgeglichen werden, wodurch zulässige Toleranzwerte des Nahtflankenwinkels α umgesetzt werden. Das Nachschweißen der Schweißnaht soll gänzlich verhindert werden.

Diese Aufgabe wird durch die in den Ansprüchen 1 und 12 angegebenen Maßnahmen gelöst. In den weiteren Ansprüchen sind zweckmäßige Ausgestaltungen und Weiterbildungen dieser Maßnahmen angegeben.

Die Erfindung wird in einem Ausführungsbeispiel anhand der beigefügten Zeichnungen näher erläutert. Es zeigen
- Fig. 1: ein Blockschaltbild der Anordnung zur Regelung der Nahtlage einer stringerversteiften Glattblechschale;
- Fig. 2: ein Blockschaltbild der Nahtlagen-Regeleinrichtung nach der Fig. 1;
- Fig. 3: eine Anordnung der lasergeschweißten Teile;
- Fig. 4: eine Darstellung der Abhängigkeit des Nahtflankenwinkels α von der Nahtlage NL.

Einleitend wird erwähnt, dass das folgende Ausführungsbeispiel sich auf eine Glattblechschale 10, die als ein durch Laserstrahlschweißen mit einem Fügepartner zu verbindendes Profil eingesetzt wird, und auf einen Stringer 11, der als Fügepartner eingesetzt wird, bezieht, welche durch Laserschweißnähte 13, 131 zu einem Schweißteil vereinigt werden. Eine dermaßen durch Laserstrahlschweißung gefügte stringerversteifte Glattblechschale 10 wird beispielsweise im Flugzeugbau verstärkt Anwendung finden, wobei eine Verbesserung der Schweißnahtqualität und eine Verringerung der Ausschussquote beim Laserstrahlschweißen sowie die Einsparung von zusätzlichem Aufwand durch zeitaufwendiges Nachschweißen einer ständigen Beobachtung unterliegt. Mit der nachfolgend angegebenen Anordnung und dem angegebene Verfahren zur Regelung der Nahtlage NL eines (im Endstadium) laserstrahlgefügten Profils (einer stringerversteiften Glattblechschale) werden diese Nachteile abgestellt.

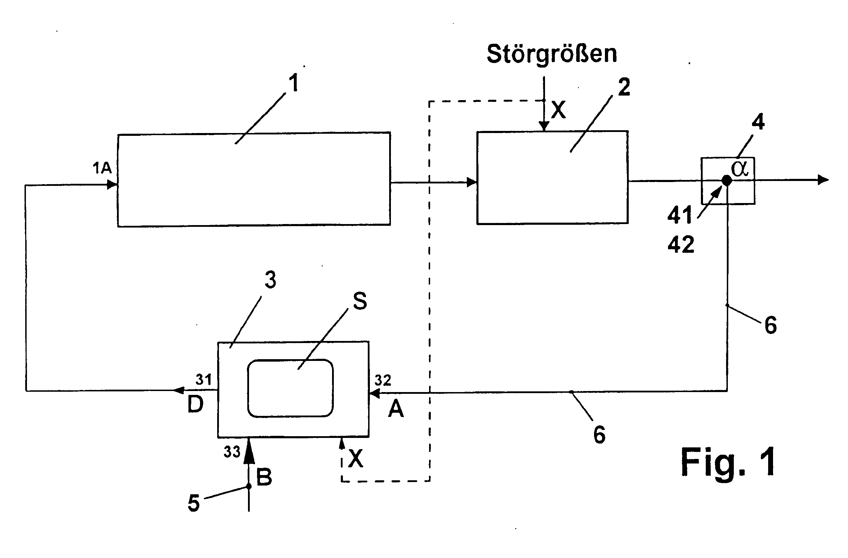

In der Fig. 1 wird nun das Blockschaltbild der Anordnung zur Regelung der Nahtlage NL der stringerversteiften Glattblechschale 10 (eines stringerversteiften Hautfeldes) vorgestellt, welche die Nahtlage NL der Laserschweißnähte 13, 131, mit denen die Teile nach der Fig. 3 (Stringer 11, Glattblechschale 10) randseitlich des Schweißstoßes 12 (des Haut-Stringer-Stoßes) verbunden werden, regelt und damit in Korrelation die Realisierung des Nahtflankenwinkel α der Laserschweißnähte 13, 131 (innerhalb der zugelassenen Toleranzwerte) beeinflusst.

Um die Funktion(en) der Anlagekomponenten dieser Anordnung verständlicher zu machen, wird vorgreifend den Ausführungen hinsichtlich der Fig. 1 - zunächst näher auf die Anordnung nach der Fig. 3 eingegangen. In der Fig. 3 wird eine Glattblechschale 10 und einen Stringer 11, der lotrecht stehend (also: im rechten Winkel stehend) auf der Glattblechschale 10 positioniert ist, dargestellt. Dabei stößt die Stirnfläche des Stringers 11 auf die Oberfläche der Glattblechschale 10, wodurch an den Auflageflächen dieser Teile ein Schweißstoß 12 gebildet wird. Der Stringer 11 betrifft ein Winkelprofil, das (im Flugzeugbau) zur zusätzlichen, örtlich begrenzten Aussteifung der Glattblechschale 10 verwendet wird. Die Glattblechschale 10 betrifft ein Hautfeld (eine Außenhaut eines Flugzeuges), das (die) mit einem geschweißten Stringerprofil (wegen auftretenden Druck- und /oder Schubbelastungen auf die Glattblechschale 10) ausgesteift wird.

Links- und rechtsseitig des Stringer-Querschnitts ist jeweils eine Laserschweißquelle 14, 15 angeordnet, welche zur Realisierung der beabsichtigten Schweißnahtverbindung der beiden Teile während des Schweißprozesses einen gradlinig gerichteten Laserstrahl 16,17 ausstrahlt, der randseitlich auf den Schweißstoß 12 der beiden Teile gerichtet ist. Danach wird eine erste Laserschweißquelle 14, die linksseitig des Stringer-Querschnitts angeordnet ist, mit einem ersten Laserstrahl 16, der in Richtung einer ersten gradlinigen Laserstrahl-Richtungsachse LSAR1 strahlt, im Bereich des Schweißstoßes 12 eine erste Laserschweißnaht 13 realisieren, dessen Lichtenergiegehalt bis zu einem unteren Bereich der Laserschweißnaht 13 (Nahtwurzel) vordringt, an dem kein Aufschmelzen des metallenen Werkstoffs mehr stattfinden wird. Gleichermaßen wird zeitgleich eine zweite Laserschweißquelle 15, die rechtsseitig des Stringer-Querschnitts angeordnet ist, mit einem zweiten Laserstrahl 17, der in Richtung einer zweiten gradlinigen Laserstrahl-Richtungsachse LSAR2 strahlt, im Bereich des Schweißstoßes 12 eine zweite Laserschweißnaht 131 mit den genannten Wirkungen realisieren.

Davon ausgehend, dass die beiden Laserstrahlen 16, 17 einen (vor)bestimmten Einfallswinkel β (von größer 0° [Null Grad]) einschließen, der zwischen einer Schweißstoß-Tangente SST, die der Oberfläche der Glattblechschale 10 anliegt, und der betreffenden Laserstrahl-Richtungsachse LSRA1, LSRA2 liegt, wird die Eindringtiefe der beiden Laserstrahlen 16, 17 an einem (vordefinierten) Schweißpunkt SP enden, deren Schweißwirkung an einem oberen Bereich der betreffenden Laserschweißnaht 13, 131 einsetzen und an der Nahtwurzel enden wird.

Unter der Vorrausetzung, dass sich die Position eines (den betreffenden Laserschweißquellen 14, 15 integrierten) Laserstrahlkopfes, aus dem der einzelne Laserstrahl 16, 17 in den (freien) Raum austritt, verändern lässt, wird man (mit der Anordnung nach der Fig. 1) eine geregelte Korrektur der Lage der beiden Laserstahlquellen 14, 15 durch räumliche Veränderung von deren Ausgangsposition in veränderter Achsenrichtung im 3-dimensionalen Raum vornehmen. Dadurch wird gleichfalls der Einfallswinkel β des einzelnen Laserstrahls 16, 17 und dessen Eintrittslage in den randseitlichen Bereich des Schweißstoßes 12 zugunsten der Veränderung des Nahtflankenwinkels α verändert.

Nachfolgend wird eine Definition der Nahtlage NL und des Nahtflankenwinkels α vorgeschlagen, die dem Verständnis für die weiteren Betrachtungen, die sich mit der Regelung der Nahtlage NL und der korrelierenden Einflussnahme auf den Nahtflankenwinkel α befassen, förderlich sind.

Geht der Betrachter der Fig. 3 von einem (noch) nicht lasergeschweißten Stringer 11 aus, dann lässt sich die Nahtlage NL durch einen Abstand AS erfassen, der an einer links- und rechtsseitig dem Stringer-Querschnitt gelegenen Stringer-Oberfläche dieses nicht lasergeschweißten Stringers 11 angelegten und vertikal gelegenen Stringertangente ST vermessen wird.

Der Abstand AS wird durch einen Laserstrahl-Eintrittspunkt LEP, durch den der einzelne Laserstrahl 16, 17 unter einem bestimmten Eintrittswinkel β in den nicht lasergeschweißten Stringer 11 eindringen wird, und einen Schweißstoß-Schnittpunkt SSP, durch den die vorerwähnte Schweißstoß-Tangente SST treten wird, eingegrenzt. Sofern nun an den oberen Bereich der einzelnen Laserschweißnaht 13, 131 eine Schweißnaht-Tangente SNT angelegt wird, wird letztere und die vorerwähnte Schweißstoß-Tangente SST den sogenannten Nahtflankenwinkel α einschließen, wobei sich die Lage dieser beiden Tangenten mit Hilfe trigonometrischer Funktionen oder durch Berechnung des Bogenmaßes ermittelt läßt.

Es soll nicht unerwähnt bleiben, dass sich der genannte Einfallswinkel β ähnlich durch die Erfassung der Lage der einzelnen Laserstrahl-Richtungsachse LSRA1, LSRA2 und einer parallel zum Oberflächenbereich der Glattblechschale 10 verlaufenden Richtungsachse RA mit Hilfe trigonometrischer Funktionen oder durch Berechnung des Bogenmaßes ermittelt lässt, wobei die Achsenlage der Richtungsachse RA (durchaus) mit derjenigen der Schweißstoß-Tangente SST übereinstimmen wird.

Es wird angestrebt, dass durch die geregelte Veränderung des Einfallswinkels β des einzelnen Laserstrahls 16, 17 unter praxisnahen Bedingungen ein Nahtflankenwinkel α schweißtechnisch umgesetzt wird, dessen Winkelbereich zwischen 40° und 50° tolerieren wird, wobei praktisch eine Nahtlage NL von etwa plus 0,5 mm angestrebt wird.

Zurückkommend auf das Blockschaltbild der Fig. 1 wird dort eine Anordnung zur Regelung der Nahtlage NL einer stringerversteiften Glattblechschale 10 vorgestellt, die aus mehreren informationstechnisch, seriell (in einem Regelkreis) verbundenen Anlagenkomponenten und einer integrierten Nahtlagen-Regeleinrichtung 3 besteht. Die Anlagenkomponenten beziehen sich auf eine Nahtlage-Komponente 1 zur Veränderung der Nahtlage NL und eine Laserschweiß-Prozeß-Komponente 2 mit zwei integrierten Laserschweißquellen 14, 15 zur Realisierung der einzelnen Laserschweißnaht (13, 131), die über Informationsleitungen in Reihe verbunden sind. Die Nahtlagen-Regeleinrichtung 3 wird mit einem Regler ausgeführt, der ein als Proportionalregler (P-Regler) ausgebildeter elekronischer Einweg-Regler ist. Außerdem ist der Anordnung eine Sensoreinrichtung 4 integriert, die unmittelbar an oder nahegelegen der Laserschweiß-Prozeß-Komponente 2 befestigt ist. Die Sensoreinrichtung 4 umfaßt zwei Sensorkomponenten 41, 42, die jeweils links- und rechtsseitig des Stringer-Querschnitts gelegen (nach dem Vorbild der Fig. 3) positioniert sind. Es werden optische Sensorkomponenten 41, 42 eingesetzt, die beispielsweise einen Lichtschnittsensor aufweisen. Die Befestigung der Sensoreinrichtung 4 erfolgt dermaßen, dass die Sensorkomponenten 41, 42 nach- und gleichlaufend der mit Schweißgeschwindigkeit sich horizontal bewegenden Laserschweißquellen 14, 15 angeordnet sind. Daraus erklärt sich auch die Lage der Sensorkomponenten 41, 42, die neben- und nahegelegen der einzelnen Laserschweißnaht 13, 131 bzw. nebengelegen dem Schweißstoß 12 (Stringer-Haut-Stoß) positioniert sind, deren Sensorkopf auf die betreffende Laserschweißnaht 13, 131 gerichtet ist, um die Geometrie (das geometrische Abbild) der einzelnen gezogenen Laserschweißnaht 13, 131 (randseitlich dem Schweißstoß 12) optisch zu erfassen.
Weil die Funktion der als Lichtschnittsensor (als Falldorf-Sensor) ausgebildeten einzelnen optischen Sensorkomponente 14, 15 an sich durch die Fa. Falldorf & Co. GmbH der Fachwelt, wie einleitend angegeben, bekannt ist, der eine Geometrievermessung von Schweißnähten mit dem bekannten Lichtschnittverfahren umsetzt und sich für die optische Erfassung der qualitätsbestimmenden Schweißnaht-Kenngrößen (parametrische Auswertung des Oberflächenprofils, beispielsweise einen Nahteinfall, Kantenlage bzw. Kantenversatz) eignet, wird nicht näher auf dessen Anwendungsmöglichkeit zur Erfassung des optischen Abbildes der einzelnen Laserschweißnaht 13,131 eingegangen. Diese Sensorkomponenten 41, 42 der Sensoreinrichtung 4 realisieren die optische Erfassung des Nahtflankenwinkels α und (ggf.) der Nahtlage NL und transformieren das (die) Ergebnis(se) der optischen Messung in eine signalgewandelte Sensorinformation A, das über eine gemeinsam benutzte Informationsleitung 6, die dem ersten Eingang 32 der Nahtlagen-Regeleinrichtung 3 informationstechnisch verbunden ist, letzterer übermittelt wird.

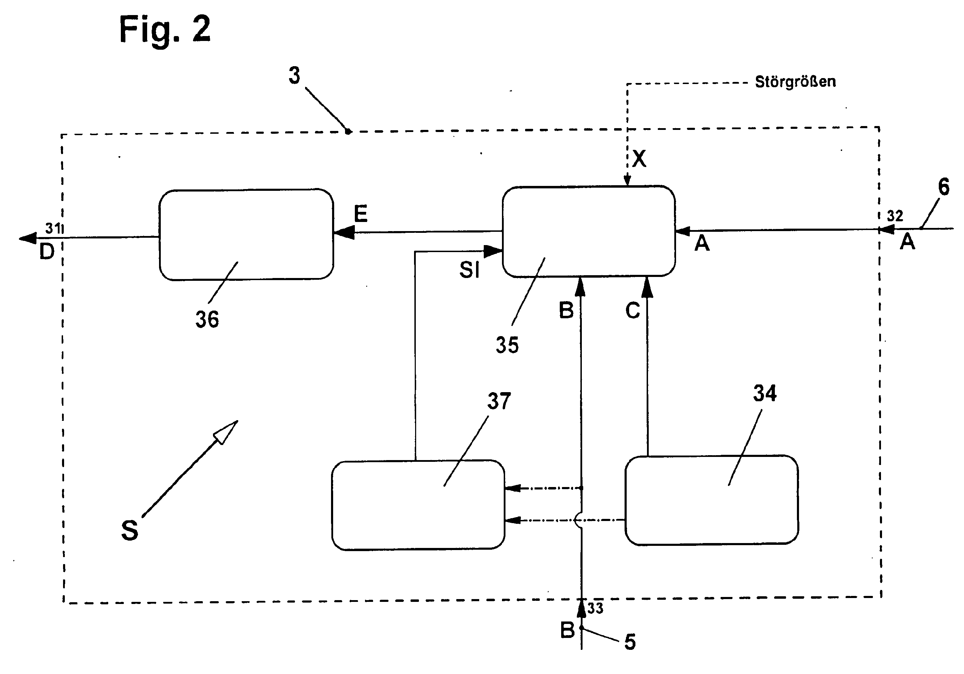

Die Nahtlagen-Regeleinrichtung 3 ist intern mit einer Schaltung S ausgestattet ist, die in der Fig. 2 dargestellt ist. Die Schaltung S umfasst mehrere Schaltungskomponenten, die funktionell verbunden sind. Die Schaltung S ist - aufgrund der funktionellen Verknüpfung der einzelnen Schaltungskomponenten - befähigt, einen Informationsvergleich der während des Schweißvorganges (kontinuierlich) zugeführten (schaltungsextern bezogenen) Sensor-Information(en) A mit einer Sollgrößen-Information B des Nahtflankenwinkels α umsetzen. Danach wird aus dem Vergleichsergebnis eine Regelgröße D für die Veränderung des Nahtflankenwinkels α generiert, die am Ausgang 31 der Nahtlagen-Regeleinrichtung 3 bereitgestellt und der Nahtlage-Komponente 1 zur Veränderung der Nahtlage NL zugeführt wird.

Um die Funktion der Schaltung S verständlicher zu machen, wird - vorgreifend den Ausführungen hinsichtlich der Fig. 1 - näher auf die Schaltungsanordnung nach der Fig. 2 eingegangen. In der Fig. 2 wird eine Anordnung mehrerer Schaltungskomponenten und deren funktionelle Verknüpfung gezeigt. Die Schaltung S umfasst eine Vergleichskomponente 35, eine Speicherkomponente 34, eine Wandlerkomponente 36 und eine (wahlweise angeordnete) Schwellwertkomponente 37. Letztere wird der Schaltung S hauptsächlich aus Gründen der zuverlässigen Bereitstellung einer Sollgrößen-Information des Nahtflankenwinkels α integriert, die mit der erwähnten Sensor-Information A (als Istgrößen-Information des Nahtflankenwinkels α) verglichen wird, deren wahlweise Verwendung nachfolgend deutlicher wird. Mit deren schaltungstechnischen Berücksichtigung wird erreicht, dass man unter gestörten Bedingungen während der Schweißdurchführung auch eine gespeicherte Sollgrößen-Information C abrufen kann, um dennoch einen Nahtflankenwinkel α mit den geforderten Toleranzwerten zu erzielen.

Die Vergleichskomponente 35 ist eingangsseitig mit dem erwähnten ersten Eingang 32 der Nahtlagen-Regeleinrichtung 3 verbunden, über den ihr die genannten Sensor-Informationen A zugeleitet werden.

Weiterhin ist einem zweiten Eingang 33 der Nahtlagen-Regeleinrichtung 3 eine externe Informationsleitung 5 angeschlossen, die ebenfalls einem weiteren Eingang der Vergleichskomponente 35 zugeschalten ist. Über diese externe Informationsleitung 5 wird der Vergleichskomponente 35 (im Normalfall) eine schaltungsextern eingespeiste Sollgrößen-Information B des Nahtflankenwinkels α zugeleitet. Außerdem ist einem dritten Eingang der Vergleichskomponente 35 eine Verbindung mit der Speicherkomponente 34 zugeschalten, über welche (nur bei Ausfall oder Störung auf der externen Informationsleitung 5 und demzufolge einem Ausbleiben der Sollgrößen-Information B) eine schaltungsintern gespeicherte Sollgrößen-Information C von der Speicherkomponente 34 zugeleitet wird. Die Schwellwertkomponente 37, welche befähigt ist, den korrekten Informationsinhalt der Sollgrößen-Information B anhand eines informationstechnischen Schwellwertes festzustellen, wird bei dessen korrekter Feststellung den direkten Informationsweg über die externe Informationsleitung 5 freischalten (veranlassen).

Anderenfalls wird die Schwellwertkomponente 37 bei Unterschreitung eines informationstechnischen Schwellwertes, der eine festgestellte Störung oder eine ausbleibende Sollgrößen-Information B signalisiert, über eine der Vergleichskomponente 35 eingangsseitig angeschlossene weitere Verbindung eine Schwellwert-Information Sl übertragen, welche der Vergleichskomponente 35 das Ausbleiben der Sollgrößen-Information B signalisiert.

Die Vergleichskomponente 35 wird daraufhin von der Speicherkomponente 34 die gespeicherte (fest vorgegebenen) Sollgrößen-Information C anfordern. Sofern eine der beiden Sollgrößen-Informationen B, C der Vergleichskomponente 35 verfügbar ist, wird letztere einen Vergleich der ihr während des Schweißvorganges zugeführten Sensor-Information(en) A mit der entsprechenden Sollgrößenlnformation B, C vornehmen. Das ermittelte Ergebnis des Soll-Ist-Vergleiches wird in einer Vergleichsergebnis-Information E zusammen gefasst, das die Vergleichskomponente 35 über eine der Wandlerkomponente 36 angeschlossene Verbindung letzterer übermittelt. Die Wandlerkomponente 36 wird daraufhin die erhaltene Vergleichsergebnis-Information E in eine Regelgröße D des Nahtflankenwinkels α generieren, das am Ausgang 31 der Nahtlagen-Regeleinrichtung 3 abrufbar ist. Der Ausgang 31 ist der Wandlerkomponente 36 ausgangsseitig verbunden.

Es bleibt zu erwähnen, dass man auf die Schwellwertkomponente 37 durchaus verzichten kann, die deshalb wahlweise der Schaltung S integriert ist, nur lässt sich dann mit ihr keine Störung oder das Ausbleiben der extern zugeführten Sollgrößen-Information B feststellen und möglichenfalls hilfsweise die Bereitstellung der gespeicherten Sollgrößen-Information C beeinflussen. Sofern keine Schwellwertkomponente 37 berücksichtigt wird, wird die Sollwert-Information B dann die Vergleichskomponente 35 auf direktem Leitungsweg erreichen.

Auch soll nicht unerwähnt bleiben, dass möglicherweise signalgewandelte Störgrößen-Information(en) X, welche beispielsweise einen Bauteileverzug, ein Verkippen des Stringers 11 auf der Glattblechschale 10 oder sonstige Störgrößen-Information(en) von externen Anlagekomponenten der benutzten Schweißanlage kundtun, zusätzlich (der an die Vergleichskomponente 35 übermittelten Informationen) der Vergleichskomponente 35 auf dem externen Leitungsweg zugeleitet werden, welche mit in den stattfindenden Informationsvergleich einbezogen werden. Diese Störgrößen-Information X erreicht in der Regel die Laserschweiß-Prozeß-Komponente 2 (nach der Fig. 1), die daraufhin möglichenfalls den Laserschweißprozeß erst gar nicht einleitet oder diesen sofort abbricht. Ein Gleiches würde die Vergleichskomponente 35 veranlassen.

Zurückkommend auf das Blockschaltbild nach der Fig. 1 wird fortgesetzt, dass der Eingang 1A der Nahtlage-Komponente 1 dem Ausgang 31 der Nahtlagen-Regeleinrichtung 3 informationstechnisch verbunden ist. Über diesen Leitungsweg wird der Nahtlage-Komponente 1 die schaltungsgenerierte Regelgröße D für die Veränderung des Nahtflankenwinkels α zugeführt.

Die Nahtlage-Komponente 1 wird daraufhin eine Veränderung der Nahtlage NL dermaßen informationstechnisch umsetzten, wonach von ihr auf der Basis der erreichten Regelgröße D eine Stellinformation zur lokalen Veränderung der Hauptachsen ( möglicherweise durch Inanspruchnahme von weiteren Hilfsachsen), auf denen die Laserschweißquellen 14, 15 der Laser-Prozeß-Komponente 2 (nach der Fig. 3) sich bewegen, gebildet und an die Laser-Prozeß-Komponente 2 abgegeben wird. Letztere veranlasst daraufhin, wie bereits hinsichtlich der Fig. 3 angedeutet, eine Positionsveränderung der örtlichen Lage der Laserschweißquellen 14, 15 bzw. deren Laserstrahlköpfe, wodurch aufgrund der veränderten Lage der Laserstrahlköpfe der erste und zweite Laserstrahl 16, 17 der ersten und zweiten Laserschweißquelle 14, 15 unter einem veränderten Einfallswinkel β in die laserzuschweißenden Teile eintreten werden. Der Schweißprozeß wird beschrieben geschehen, wobei eine Veränderung der Nahtlage NL der betreffenden Laserschweißnaht 13, 131 eintreffen wird.

Es bleibt zu erwähnen, dass beabsichtigt wird, den Nahtflankenwinkel α trotz bestehenden Einfluss von geringfügig wirkenden Störgrößen (Lagetoleranz des Laserstrahls, Toleranzen des taktilen Sensors zur Erfassung des Schweißstoßes 12, Torsion und Verbiegen des Stringers 11 durch Rollenführung) konstant zu halten.

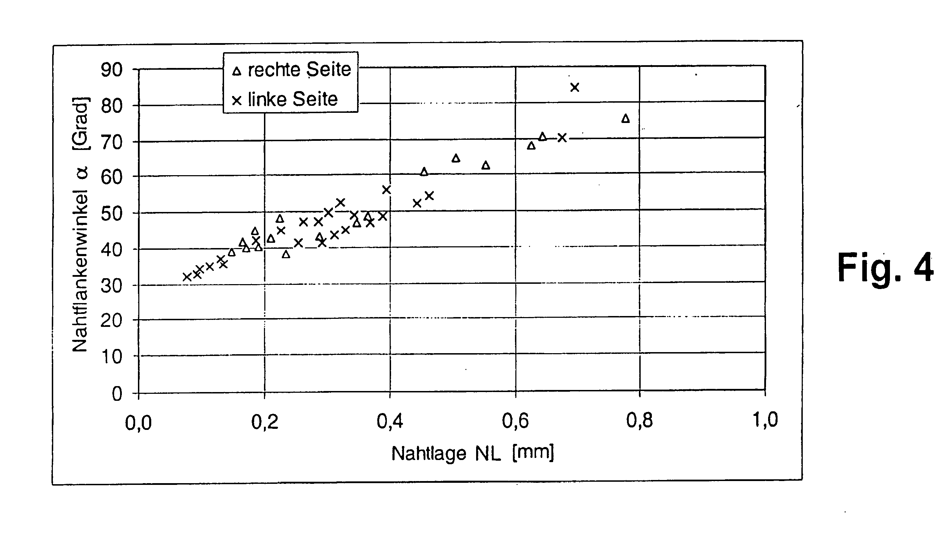

Dabei besteht die Notwendigkeit, dass die vorbeschriebenen optischen Sensoren der Sensor-Komponenten 41, 42 möglichst dicht an den gezogenen Laserschweißnähten 13, 131 anzuordnen sind, um das geometrische Abbild der Laserschweißnähte 13, 131 vollständig und schnell sowie genau zu erfassen Hinsichtlich der Fig. 4 wird ergänzt, dass der Fachmann - mit einem Blick auf die Fig. 3 - aus dieser Darstellung die Abhängigkeit des Nahtflankenwinkels α von der Nahtlage NL entnehmen wird. Die real unter Praxisbedingungen gemessenen und bildlich dargestellten Werte offenbaren, dass der Nahtflankenwinkel α proportional zu Nahtlage NL ist.

Das Verfahren zur Regelung der Nahtlage NL einer stringerversteiften Glattblechschale 10 wird mit der vorgestellten Anordnung nach den Figuren 1 bis 2 durchgeführt, bei dem die zu schweißenden Teile nach dem Vorbild der Fig. 3 (bereits durch zwei Schweißnähte 13, 131 verbunden) positioniert werden. Dabei wird die Stirnfläche des Stringers 11 rechtwinklig und im Schweißstoß 12 (Schale-Stringer-Stoß) auf der Oberfläche der Glattblechschale 10 angeordnet, die anfänglich auf den nachfolgend geschilderten Laserschweißprozess vorbereitet werden. Das Verfahren wird (vor der eigentlichen Schweißdurchführung) mit einer Justierung der Lage der zwei Laserstahlquellen 14, 15 (Laserstrahlköpfe) beginnen, die auf Basis einer anfänglichen optischen Vermessung des Schweißstoßes 12 mit einer dementsprechend korrelierenden Regelgröße D für die Veränderung des Nahtflankenwinkels α durch die Nahtlage-Komponente 1 justiert werden. Danach wird auf Basis dieser Regelgröße D die Glattblechschale 10 und der Stringer 11 randseitlich am Schweißstoß 12 durch zwei mit jeweils einem Laserstrahl 15, 16 geschweißte Laserschweißnähte 13, 131 zu einem Schweißteil vereinigt werden.

Der jeweils von einer Laserstrahlquelle 14, 15 ausgestrahlte Laserstrahl 16, 17 wird unter einem Einfallswinkel β auf den randseitlichen Bereich des Schweißstoßes 12 gerichtet. Die Laserstrahlquelle 14, 15 wird nebengelegen dem Stringer-Querschnitt (nach der Fig. 3) mit Schweißgeschwindigkeit bewegt.

Daran schließt sich die eigentliche Durchführung des Verfahrens an, das nach den folgenden Schritten a) bis c) realisiert wird.
Zunächst wird
a) die Ist-Größe des Nahtflankenwinkels α durch die mit Schweißgeschwindigkeit nachlaufende Sensoreinrichtung 4 sensitiv optisch erfasst, die von letzterer danach in eine signalgewandelte Sensor-Information A umgesetzt wird und dann von der Sensoreinrichtung 4 an die Nahtlagen-Regeleinrichtung 3 informationstechnisch übermittelt wird.
   Darauffolgend wird
b) die signalgewandelte Sensor-Information A von einer Vergleichskomponente 35 der Nahtlagen-Regeleinrichtung 3 mit einer extern zugeführten Sollgrößen-Information B oder einer intern gespeicherten Sollgrößen-Information (C) informationstechnisch verglichen, wobei die transferierte Sollgrößen-Information B (des Nahtflankenwinkels α) über eine der Vergleichskomponente 35 direkt verbundene externen Informationsleitung 5 und die gespeicherte Sollgrößen-Information C von einer der Nahtlagen-Regeleinrichtung 3 wahlweise integrierten Speicherkomponente 34, die intern der Nahtlagen-Regeleinrichtung 3 angeordnet ist, bezogen werden.
   Aus den verglichenen Informationen wird dann durch die Vergleichskomponente 35 eine Vergleichsergebnis-Information E ermittelt, welche durch eine der Vergleichskomponente 35 informationstechnisch verbundene Wandlerkomponente 36 der Nahtlagen-Regeleinrichtung 3 danach zu der Regelgröße D generiert wird, das von der Wandlerkomponente 36 nach geschehener Generierung an die Nahtlage-Komponente 1 informationstechnisch übermittelt wird
   Darauffolgend wird
c) die Nahtlage-Komponente 1 einen (der Vergleichsergebnis-Information E entsprechenden) Stellgrößenwert an eine Laserschweiß-Prozeß-Komponente 2 abgeben, die auf Grund des erhaltenen Stellbefehls daraufhin eine Korrektur der lokalen Lage der beiden Laserstahlquellen 14, 15 durch Positionsveränderung der Laserstrahlköpfe der Laserschweißquellen 14, 15 vornehmen wird. Dabei wird die Ausgangsposition der Laserstrahlquellen 14, 15 in korrigierender Achsenrichtung im 3-dimensionalen Raum dermaßen verändert, dass gleichermaßen der Einfallswinkel β des einzelnen Laserstrahls 16, 17 und dessen Eintrittslage (im Vergleich der Ausgangsposition) in den randseitlichen Bereich des Schweißstoßes 12 zugunsten der Veränderung des Nahtflankenwinkels α korrigiert verändert wird, sofern durch die Ermittlung der Vergleichsergebnis-Information E nach Schritt b) eine Abweichung der Sensor-Information A von der Sollgrößen-Information B eintreffen wird.

Die Verwendung einer Schwellwertkomponente 37 und deren Funktion (Arbeitsweise), die der Nahtlagen-Regeleinrichtung 3 ebenfalls integriert ist, sofern man nicht auf die Speicherkomponente 34 verzichtet, wird hinsichtlich der vorgestellten Anordnung ausreichend beschrieben.

Das angegebene Verfahren wird durch weitere ausgestaltende Maßnahmen, die nachfolgend angegeben werden, ergänzt. Danach wird vorgesehen, dass, wie vorher angedeutet, nach der geschehenen Positionierung der zu schweißenden Teile vor dem Beginn des Laserschweißprozesses deren Schweißstoß 12 mit der Sensoreinrichtung (4) sensitiv optisch erfasst und daraus die wertmäßige Vorgabe der zugeführten oder gespeicherten Sollgrößen-Information B, C abgeleitet wird. Ferner werden die verschiedenen Störgrößen-Informationen, die während des Laserschweißprozesses auf letzteren und insbesondere auch auf den Istwert des Nahtflankenwinkels α einen Einfluss ausüben, der Nahtlage-Regeleinrichtung 3 übermittelt, die, sofern die sensitive Erfassung des Nahtflankenwinkels α während des Laserschweißprozesses ausfällt, anstelle der signalgewandelten Sensor-Information A zum Vergleich mit den Sollgrößen-Informationen B, C herangezogen werden. Weiter wird vorgesehen, dass durch die Veränderung des Einfallswinkels β des einzelnen Laserstrahls 16, 17 ein Nahtflankenwinkel α schweißtechnisch umgesetzt wird, dessen Winkelbereich zwischen 40° und 50° tolerieren wird.

Auch wird vorgesehen, dass die Nahtlage NL durch die sensitive Erfassung eines Abstandes AS ermittelt wird, der an einer dem nicht lasergeschweißten Stringer 11 angelegten und vertikal gelegenen Stringertangente ST vermessen wird, wobei der Abstand AS durch einen Laserstrahl-Eintrittspunkt LEP, durch den der einzelne Laserstrahl 16, 17 in das nicht lasergeschweißte Teil (in den nicht lasergeschweißten Stringer 11) eindringen wird, und einen Schweißstoß-Schnittpunkt SSP eingegrenzt wird, durch den eine Schweißstoß-Tangente SST treten wird, die im Bereich des Schweißstoßes 12 an den Oberflächenbereich der Glattblechschale 10 gelegt wird. Die Nahtlage NL wird etwa plus 0,5 mm betragen. Auch ist vorgesehen, dass der Nahtflankenwinkel α, der von einer Schweißnaht-Tangente SNT, die an den oberen Bereich der einzelnen Schweißnaht 13, 131 angelegt wird, und der Schweißstoß-Tangente SST, die im Bereich des Schweißstoßes 12 an den Oberflächenbereich der Glattblechschale 10 gelegt wird, eingeschlossen wird, durch sensitive Erfassung der Tangentenlage der beiden Tangenten SNT, SST und anschließende Berechnung des Bogenmaßes oder nach trigonometrischen Funktionen ermittelt wird. Weiterhin wird vorgesehen, dass der Einfallswinkel β, der von einer jeweiligen Laserstrahl-Richtungsachse LSRA1, LSRA2 des einzelnen Laserstrahls 15, 16 und einer parallel zum Oberflächenbereich der Glattblechschale 10 verlaufenden Richtungsachse RA eingeschlossen wird, durch sensitive Erfassung der Achsenlagen und anschließende Berechnung des Bogenmaßes oder nach trigonometrischen Funktionen ermittelt wird.

Abschließend werden folgende Bemerkungen gemacht, mit denen eine Zusammenfassung der voran gestellten Ausführungen in vereinfachter Darstellung gegeben wird.

Bisher werden sogenannte Lichtschnittsensoren (Falldorf-Sensoren) bei herkömmlichen Laserschweißprozessen eingesetzt, um vor dem Schweißprozess den Schweißstoß der nicht geschweißten Teile zu erfassen, oder aber die erzeugte Laserschweißnaht an lasergeschweißten Teilen hinsichtlich deren Oberflächengeometrie nach dem Schweißprozeß zu überwachen. Diese bekannte Maßnahme wird eingangs hinreichend erläutert. Die Erfindung verfolgt einen anderen Gedanken, wonach die Position der Schweiß(wärme)quelle [Laserschweißquelle] nach geschehener Schweißnahtlegung, also unmittelbar nachlaufend der Schweiß(wärme)quelle, anhand der gemessenen Oberflächengeometrie der gezogenen Laserschweißnaht geregelt wird. Durch diese Regelung soll eine Verbesserung der Oberflächengeometrie und insbesondere des Nahtflankenwinkels α erzielt werden. Dieses ist sinnvoll, weil die Oberflächengeometrie respektive dieser Nahtflankenwinkel α eine wesentliche Ausgangsgröße des Laserschweißprozesses darstellt. Dabei wird vorgesehen, dass der Lichtschnittsensor unmittelbar hinter dem Laserschweißprozeß (nachlaufend der gezogenen Laserschweißnaht) angeordnet ist. Er wird aus der gemessenen Geometrie der Laserschweißnaht einen Kennwert für die Regelung der Position der Laserschweißquelle generieren. Dabei wird eine Lageregelung der Laserschweißquelle auf der Basis der erzeugten Nahtgeometrie (des erfassten Nahtflankenwinkels α und korrelierend der Nahtlage NL) realisiert.

Die Lösung erfolgt mit Hilfe der vorgeschlagenen Regelung der Nahtlage NL in Abhängigkeit des unmittelbar nach dem Schweißen gemessenen Nahtflankenwinkels α an der gezogenen Laserschweißnaht. Dieses ist möglich, weil ein systematischer und linearer Zusammenhang zwischen der Eingangsgröße :"Nahtlage NL" und der Ausgangsgröße: "Nahtflankenwinkels α" besteht. Dabei stehen einer Laserschweißanlage entsprechende Zusatzachsen (Hilfsachsen) zur Ausführung der erforderlichen Korrekturbewegung an einer laserstrahlabgebenden Laserschweißquelle zur Verfügung, um eine ortsveränderbare Bewegung des Laserstrahls zugunsten der qualitativen Veränderung des Nahtflankenwinkels α und der korrelierenden Nahtlage NL umzusetzen. Mit der Regelung werden folgende Vorteile erreicht, nach denen der Aufwand (Kosten und Zeit) für das erforderliche Nachschweißen der bereits gezogenen Laserschweißnaht, wenn der Nahtflankenwinkel α außerhalb der zulässigen Toleranz liegen sollte, entfallen wird. Die Bauteilqualität der Schweißteile wird durch geringe Schwankungen des Nahtflankenwinkels α erhöht. Es wird eine Verringerung der Ausschussquote beim geregelten Laserstrahlschweißen (auch ggf. beim Nachschweißen) umgesetzt.

## Patentansprüche

1. Anordnung zur Regelung der Nahtlage eines laserstrahlgefügten Profils, wobei die zu fügenden Teile, von denen die Stirnfläche eines Fügepartners rechtwinklig auf die Oberfläche des Profils stößt, beiderseitig des Fügepartners randseitlich am Schweißstoß (12) durch zwei mit jeweils einem Laserstrahl (16, 17) geschweißte Laserschweißnähte (13, 131) zu einem Schweißteil vereinigt sind, die aus mehreren seriell angeordneten und informationstechnisch verbundenen Anlagenkomponenten, davon eine Nahtlage-Komponente (1) zur Veränderung der Nahtlage (NL) und eine Laserschweiß-Prozeß-Komponente (2) mit zwei integrierten Laserschweißquellen (14, 15) zur Realisierung der einzelnen Laserschweißnaht (13, 131), aufgebaut ist, und der eine Nahtlagen-Regeleinrichtung (3), deren Ausgang (31) der Nahtlage-Komponente (1) informationstechnisch verbunden ist, sowie eine Sensoreinrichtung (4) integriert ist, wobei letztere unmittelbar an oder nahe der Laserschweiß-Prozeß-Komponente (2) installiert ist, die nachlaufend der mit Schweißgeschwindigkeit sich horizontal bewegenden Laserschweißquellen (14, 15) angeordnet ist und mit der Nahtlagen-Regeleinrichtung (3) informationstechnisch verbunden ist, welche die signalgewandelten Sensor-Informationen (A) an einem ersten Eingang (32) aufnimmt, bei der die Nahtlagen-Regeleinrichtung (3) intern mit einer Schaltung (S) ausgestattet ist, die aus der Verknüpfung mehrerer funktionell geschalteter Schaltungskomponenten integriert ist, und die Schaltung (S) befähigt ist, einen Informationsvergleich der während des Schweißvorganges kontinuierlich zugeführten schaltungsextern bezogenen Sensor-Informationen (A) mit einer Sollgrößen-Information (B) umsetzen und nach einem geschehenen Informationsvergleich aus dem Vergleichsergebnis eine Regelgröße (D) für die Prozessparameter zu generieren, welche am Ausgang (31) der Nahtlagen-Regeleinrichtung (3) bereitgestellt und der Nahtlage-Komponente (1) zur Veränderung der Nahtlage (NL) zugeführt wird, **dadurch gekennzeichnet, dass** die Sensoreinrichtung (4) mit mindestens einer Sensorkomponente (41, 42) zur Erfassung eines Nahtflankenwinkels (α) der erzeugten Laserschweißnaht (13, 131) integriert ist und die Nahtlagen-Regeleinrichtung (3) aus der Änderung des Nahtflankenwinkels (α) eine Regelgröße (D) zum Regeln der Nahtlage generiert, wobei die Generierung der Regelgröße (D) einen Informationsvergleich mit einer Sollgrößen-Information (B) des Nahtflankenwinkels (α) umfasst.

2. Anordnung nach Anspruch 1, **dadurch gekennzeichnet, dass** ein Eingang (1A) der Nahtlage-Komponente (1) mit dem Ausgang (31) der Nahtlagen-Regeleinrichtung (3) informationstechnisch verbunden ist.

3. Anordnung nach Anspruch 1, **dadurch gekennzeichnet, dass** einem zweiten Eingang (33) der Nahtlagen-Regeleinrichtung (3) eine Informationsleitung (5) angeschlossen ist, die zur Übermittlung der schaltungsextern bezogenen Sollgrößen-Information (6) des Nahtflankenwinkels (α) eingesetzt ist, anderenfalls eine gespeicherte Sollgrößen-Information (C) schaltungsintern einer wahlweise der Nahtlagen-Regeleinrichtung (3) installierten Speicherkomponente (34) abrufbar ist.

4. Anordnung nach Anspruch 1, **dadurch gekennzeichnet, dass** der Schaltung (S) der Nahtlagen-Regeleinrichtung (3) wenigstens eine Vergleichskomponente (35) zum Vergleich der ihr während des Schweißvorganges zugeführten Sensor-Informationen (A) mit der entsprechenden Sollgrößen-Information (B, C) und eine Wandlerkomponente (36) zur Generierung einer Regelgröße (D) für Veränderung des Nahtflankenwinkels (α), den sie aus einer von der Vergleichskomponente (35) empfangenen Vergleichsergebnis-Information (E) generieren wird, integriert ist.

5. Anordnung nach den Ansprüchen 1, 3 und 4, **dadurch gekennzeichnet, dass** die wahlweise installierte Speicherkomponente (34) und/oder der zweite Eingang (33) der Nahtlagen-Regeleinrichtung (3) mit der Vergleichskomponente (35) und letztere mit dem ersten Eingang (32) der Nahtlagen-Regeleinrichtung (3) verbunden ist, wobei ein Ausgang (38) der Vergleichskomponente (35) der Wandlerkomponente (36) eingangsseitig angeschlossen ist, die ausgangsseitig mit dem Ausgang (31) der Nahtlage-Komponente (1) verbunden ist.

6. Anordnung nach den Anspruch 3, **dadurch gekennzeichnet, dass** die Informationsleitung (5) der Vergleichskomponente (35) angeschlossen ist.

7. Anordnung nach den Ansprüchen 1 und 3 bis 5, **dadurch gekennzeichnet, dass** der Nahtlage-Regeleinrichtung (3) eine zuschaltbare Schwellwert-Komponente (37) installiert ist, die mit der Vergleichskomponente (35) verbunden ist, mit der bei einer Unterbrechung der Bereitstellung der schaltungsextern bezogenen Sollgrößen-Information (B) über die Informationsleitung (5) mittels einer Schwellwertinformation (Sl) die informationstechnische Verbindung der Speicherkomponente (34) zur Vergleichskomponente (35) veranlasst wird, wodurch letztere die gespeicherte Sollgrößen-Information (C) erreichen wird.

8. Anordnung nach Anspruch 1, **dadurch gekennzeichnet, dass** der Sensoreinrichtung (4) zwei Sensor-Komponenten (41, 42) integriert sind, die nebengelegen der einzelnen Laserschweißnaht (13, 131) angeordnet sind.

9. Anordnung nach den Ansprüchen 1, und 8, **dadurch gekennzeichnet, dass** den Sensorkomponenten (41, 42) eine weitere Informationsleitung (6), die von beiden gemeinsam benutzt wird, verbunden ist, über welche sie die erfassten Sensor-Informationen (A) bereitstellen, wobei diese weitere Informationsleitung (6) dem ersten Eingang (32) der Nahtlage-Regeleinrichtung (3) angeschlossen ist.

10. Anordnung nach den Ansprüchen 1 und 8 bis 9, **dadurch gekennzeichnet, dass** die Sensorkomponenten (41, 42) mit einem Lichtschnittsensor, der die Geometrie der einzelnen Laserschweißnaht (13, 131) randseitlich dem Schweißstoß (12) optisch erfasst, realisiert sind.

11. Anordnung nach Anspruch 1, **dadurch gekennzeichnet, dass** die Nahtlage-Regeleinrichtung (3) ein als proportionaler oder differentialer Regler ausgebildeter Einweg-Regler ist.

12. Verfahren zur Regelung der Nahtlage eines laserstrahlgefügten Profils unter Verwendung der Anordnung nach Anspruch 1, bei dem die zu fügenden Teile, von denen die Stirnfläche des Fügepartners rechtwinklig und im Schweißstoß (12) auf der Oberfläche des Profils angeordnet wird, anfänglich auf den nachfolgenden Laserschweißprozeß vorbereitet werden, darauffolgend die Lage zweier Laserstahlquellen (14, 15), die mit einer Regelgröße (D) für die Veränderung des Nahtflankenwinkels (α), welche einer Sollgrößen-Information (B, C) des Nahfflankenwinkels (α) entsprechen wird, durch die Nahtlage-Komponente (1) justiert wird, danach das Profil und der Fügepartner randseitlich am Schweißstoß (12) durch zwei mit jeweils einem Laserstrahl (15, 16) geschweißte Laserschweißnähte (13, 131) zu einem Schweißteil vereinigt werden,
wobei der einzelne Laserstrahl (16, 17) jeweils von einer Laserstrahlquelle (14, 15), die nebengelegen der lotrecht aufgespannten Seitenfläche des Fügepartners und seitwärts des Schweißstoßes (12) mit Schweißgeschwindigkeit bewegt wird, mit einem Einfallswinkel (β) auf den randseitlichen Bereich des Schweißstoßes (12) gerichtet wird, **gekennzeichnet durch** die nachfolgenden Schritte, nach denen
a) darauffolgend die Ist-Größe des Nahtflankenwinkels (α) **durch** die mit Schweißgeschwindigkeit nachlaufende Sensoreinrichtung (4) sensitiv optisch erfasst wird und von letzterer danach in eine signalgewandelte Sensor-Information (A) umgesetzt wird, welche dann von der Sensoreinrichtung (4) an die Nahtlagen-Regeleinrichtung (3) informationstechnisch übermittelt wird,
b) darauffolgend die signalgewandelte Sensor-Information (A) von der Nahtlagen-Regeleinrichtung (3) mit einer extern zugeführten Sollgrößen-Information (B) oder intern gespeicherten Sollgrößen-Information (C) informationstechnisch verglichen wird, die aus den verglichenen Informationen darauffolgend eine Vergleichsergebnis-Information (E) ermitteln wird, welche die Nahtlagen-Regeleinrichtung (3) dann zu der Regelgröße (D) generieren wird, das von ihr danach an die Nahtlage-Komponente (1) informationstechnisch übermittelt wird,
c) darauffolgend die Nahtlage-Komponente (1) eine Korrektur der Lage der beiden Laserstahlquellen (14, 15) **durch** bewegende Veränderung von deren Ausgangsposition in korrigierender Achsenrichtung im 3-dimensionalen Raum vornehmen wird, wodurch die Eintrittslage des einzelnen Laserstrahls (16, 17) in den randseitlichen Bereich des Schweißstoßes (12) zugunsten der Veränderung des Nahtflankenwinkels (α) verändert wird, sofern **durch** die Ermittlung der Vergleichsergebnis-Information (E) nach Schritt b) eine Abweichung der Sensor-Information (A) von der Sollgrößen-Information (B) eintreffen wird.

13. Verfahren nach Anspruch 12, **dadurch gekennzeichnet, dass** nach der geschehenen Positionierung der zu schweißenden Teile vor dem Beginn des Laserschweißprozesses deren Schweißstoß (12) mit der Sensoreinrichtung (4) sensitiv optisch erfasst und daraus die wertmäßige Vorgabe der zugeführten oder gespeicherten Sollgrößen-Information (B, C) abgeleitet wird.

14. Verfahren nach Anspruch 12, **dadurch gekennzeichnet, dass** verschiedene Störgrößen-Informationen, die während des Laserschweißprozesses auf letzteren und insbesondere auch auf den Istwert des Nahtflankenwinkels (α) einen Einfluss ausüben, der Nahtlage-Regeleinrichtung (3) übermittelt werden, die, sofern die sensitive Erfassung des Nahtflankenwinkels (α) während des Laserschweißprozesses ausfällt, anstelle der signalgewandelten Sensor-Information (A) zum Vergleich mit den Sollgrößen-Informationen (B, C) herangezogen werden.

15. Verfahren nach Anspruch 12, **dadurch gekennzeichnet, dass** durch die Veränderung des Einfallswinkels (β) des einzelnen Laserstrahls (16, 17) ein Nahfflankenwinkel (α) schweißtechnisch umgesetzt wird, dessen Winkelbereich zwischen 40° und 50° tolerieren wird.

16. Verfahren nach Anspruch 12, **dadurch gekennzeichnet, dass** die Nahtlage (NL) durch die sensitive Erfassung eines Abstandes (AS) ermittelt wird, der an einer dem nicht lasergeschweißten Fügepartner angelegten und vertikal gelegenen Tangente des Fügepartners vermessen wird, wobei der Abstand (AS) durch einen Laserstrahl-Eintrittspunkt (LEP), durch den der einzelne Laserstrahl (16, 17) in den nicht lasergeschweißten Fügepartner eindringen wird, und einen Schweißstoß-Schnittpunkt (SSP), durch den eine Schweißstoß-Tangente (SST) treten wird, eingegrenzt wird, die im Bereich des Schweißstoßes (12) an den Oberflächenbereich des Profils gelegt wird.

17. Verfahren nach Anspruch 16, **dadurch gekennzeichnet, dass** die Nahtlage (NL) je nach Dicke des aufzuschweißenden Fügepartners zwischen plus 0,3 mm und plus 0,5 mm tolerieren wird.

18. Verfahren nach Anspruch 12, **dadurch gekennzeichnet, dass** der Nahtflankenwinkel (α), der von einer Schweißnaht-Tangente (SNT), die an den oberen Bereich der einzelnen Schweißnaht (13, 131) angelegt wird, und der Schweißstoß-Tangente (SST), die im Bereich des Schweißstoßes (12) an den Oberflächenbereich des Profils gelegt wird, eingeschlossen wird, durch sensitive Erfassung der Tangentenlage der beiden Tangenten (SNT, SST) und anschließende Berechnung des Bogenmaßes oder nach trigonometrischen Funktionen ermittelt wird.

19. Verfahren nach Anspruch 12, **dadurch gekennzeichnet, dass** der Einfallswinkel (β), der von einer Laserstrahl-Richtungsachse (LSRA1, LSRA2) des einzelnen Laserstrahls (15, 16) und einer parallel zum Oberflächenbereich des Profils verlaufenden Richtungsachse (RA) eingeschlossen wird, durch sensitive Erfassung der Achsenlagen und anschließende Berechnung des Bogenmaßes oder nach trigonometrischen Funktionen ermittelt wird.

20. Verfahren nach Anspruch 12, **dadurch gekennzeichnet, dass** anstelle des Profils eine Glattblechschale (10) und anstelle des Fügepartners ein Stringer (11) anfänglich auf den 10 nachfolgenden Laserschweißprozess vorbereitet werden.

## Claims

1. Arrangement for adjusting the seam position of a profile joined by a laser beam, wherein the parts that are to be joined, of which the end face of a joining partner butts at right angles against the surface of the profile, are joined at the edge of the weld join (12) on both sides of the joining partner by means of two laser weld seams (13, 131) welded by a respective laser beam (16, 17), so as to form a welded part which is composed of a plurality of system components arranged in series and connected by information technology, including a seam position component (1) for changing the seam position (NL) and a laser welding process component (2) with two integrated laser welding sources (14, 15) for producing the individual laser weld seam (13, 131), and integrated in which there is a seam position adjustment device (3), the output (31) of which is connected by information technology to the seam position component (1), and also a sensor device (4), wherein the latter is installed directly on or close to the laser welding process component (2) and is arranged so as to run behind the laser welding sources (14, 15), which move horizontally at the welding speed, and is connected by information technology to the seam position adjustment device (3) which receives at a first input (32) the sensor information (A) that has been converted into signals, in which the seam position adjustment device (3) is equipped internally with a circuit (S) which integrates a chain of several functionally connected circuit components, and the circuit (S) is able to carry out an information comparison of the sensor information (A), which is continuously fed from outside the circuit during the welding process, with nominal value information (B) and, after an information comparison has taken place, to generate from the comparison result an adjustment value (D) for the process parameters, which adjustment value is provided at the output (31) of the seam position adjustment device (3) and is fed to the seam position component (1) in order to change the seam position (NL), **characterised in that** integrated in the sensor device (4) is at least one sensor component (41, 42) for detecting a seam flank angle (α) of the laser weld seam (13, 131) that is produced, and the seam position adjustment device (3) generates from the change in the seam flank angle (α) an adjustment value (D) for adjusting the seam position, wherein the generation of the adjustment value (D) comprises an information comparison with nominal value information (B) for the seam flank angle (α).

2. Arrangement according to claim 1, **characterised in that** an input (1A) of the seam position component (1) is connected by information technology to the output (31) of the seam position adjustment device (3).

3. Arrangement according to claim 1, **characterised in that** connected to a second input (33) of the seam position adjustment device (3) is an information line (5) which is used to transmit the nominal value information (6) for the seam flank angle (α) from outside the circuit, or else stored nominal value information (C) can be called up within the circuit from a memory component (34) optionally installed in the seam position adjustment device (3).

4. Arrangement according to claim 1, **characterised in that** integrated in the circuit (S) of the seam position adjustment device (3) is at least one comparison component (35) for comparing the sensor information (A), which is fed to it during the welding process, with the corresponding nominal value information (B, C) and a transducer component (36) for generating an adjustment value (D) for changing the seam flank angle (α), which it will generate from comparison result information (E) received from the comparison component (35).

5. Arrangement according to claims 1, 3 and 4, **characterised in that** the optionally installed memory component (34) and/or the second input (33) of the seam position adjustment device (3) is connected to the comparison component (35) and the latter is connected to the first input (32) of the seam position adjustment device (3), wherein an output (38) of the comparison component (35) is connected to the input side of the transducer component (36) and the output side of the latter is connected to the output (31) of the seam position component (1).

6. Arrangement according to claim 3, **characterised in that** the information line (5) is connected to the comparison component (35).

7. Arrangement according to claims 1 and 3 to 5, **characterised in that** installed in the seam position adjustment device (3) is a threshold value component (37) which can be switched on and off and is connected to the comparison component (35), by means of which, in the event of a break in the provision of the nominal value information (B) from outside the circuit via the information line (5), the information technology connection of the memory component (34) to the comparison component (35) is achieved by means of threshold value information (SI), as a result of which the stored nominal value information (C) will reach said comparison component.

8. Arrangement according to claim 1, **characterised in that** integrated in the sensor device (4) are two sensor components (41, 42) which are arranged next to the individual laser weld seam (13, 131).

9. Arrangement according to claims 1 and 8, **characterised in that** connected to the sensor components (41, 42) is a further information line (6) which is used jointly by both sensor components and via which they provide the detected sensor information (A), wherein this further information line (6) is connected to the first input (32) of the seam position adjustment device (3).

10. Arrangement according to claims 1 and 8 to 9, **characterised in that** the sensor components (41, 42) are formed by a light barrier sensor which optically detects the geometry of the individual laser weld seam (13, 131) at the edge of the weld join (12).

11. Arrangement according to claim 1, **characterised in that** the seam position adjustment device (3) is a one-way controller designed as a proportional or differential controller.

12. Method for adjusting the seam position of a profile joined by a laser beam, using the arrangement according to claim 1, in which the parts that are to be joined, of which the end face of the joining partner butts at right angles and at the weld join (12) against the surface of the profile, are initially prepared for the subsequent laser welding process, then the position of two laser beam sources (14, 15) is adjusted by the seam position component (1) by an adjustment value (D) for changing the seam flank angle (α), which will correspond to nominal value information (B, C) for the seam flank angle (α), then the profile and the joining partner are joined at the edge of the weld join (12) by means of two laser weld seams (13, 131) welded by a respective laser beam (15, 16), so as to form a welded part, wherein the individual laser beam (16, 17) is directed at an angle of incidence (β) onto the edge region of the weld join (12) by a respective laser beam source (14, 15) which is moved next to the vertically clamped side face of the joining partner and sideways along the weld join (12) at the welding speed, **characterised by** the following steps, according to which
a) the actual value of the seam flank angle (α) is then detected optically in a sensitive manner by the sensor device (4) running behind at the welding speed, and said actual value is then converted by the sensor device into signal-type sensor information (A) which is then transmitted by information technology from the sensor device (4) to the seam position adjustment device (3),
b) the sensor information (A) that has been converted into signals is then compared via information technology by the seam position adjustment device (3) with externally supplied nominal value information (B) or internally stored nominal value information (C), which will then determine, from the compared information, comparison result information (E) which the seam position adjustment device (3) will then use in order to generate the adjustment value (D) which is then transmitted by it to the seam position component (1) by information technology,
c) the seam position component (1) then performs a correction of the position of the two laser beam sources (14, 15) by moving them from their starting position in a correcting axis direction in three-dimensional space, as a result of which the point of incidence of the individual laser beam (16, 17) in the edge region of the weld join (12) is changed in favour of the change in the seam flank angle (α) if, after determining the comparison result information (E) in step b), the sensor information (A) differs from the nominal value information (B).

13. Method according to claim 12, **characterised in that**, after the parts that are to be welded have been positioned before starting the laser welding process, the weld join (12) thereof is optically detected in a sensitive manner by the sensor device (4), and the preset value of the supplied or stored nominal value information (B, C) is derived therefrom.

14. Method according to claim 12, **characterised in that** different interference value information, which during the laser welding process has an influence on the latter and in particular also on the actual value of the seam flank angle (α), is transmitted to the seam position adjustment device (3) which, if the sensitive detection of the seam flank angle (α) takes place during the laser welding process, will use this instead of the sensor information (A) that has been converted into signals for comparison with the nominal value information (B, C).

15. Method according to claim 12, **characterised in that**, by changing the angle of incidence (β) of the individual laser beam (16, 17), a seam flank angle (α) having a tolerable angular range of between 40° and 50° is set by welding technology.

16. Method according to claim 12, **characterised in that** the seam position (NL) is determined by sensitively detecting a distance (AS) which is measured on a tangent of the joining partner placed vertically and against the non-laser-welded joining partner, wherein the distance (AS) is delimited by a laser beam entry point (LEP), through which the individual laser beam (16, 17) will penetrate into the non-laser-welded joining partner, and a weld join intersection point (SSP), through which a weld join tangent (SST) will pass, which is placed in the region of the weld join (12) on the surface region of the profile.

17. Method according to claim 16, **characterised in that** the seam position (NL) will be tolerated between plus 0.3 mm and plus 0.5 mm, depending on the thickness of the joining partner to be welded.

18. Method according to claim 12, **characterised in that** the seam flank angle (α), which is enclosed by a weld seam tangent (SNT) placed at the upper region of the individual weld seam (13, 131) and the weld join tangent (SST) placed in the region of the weld join (12) on the surface region of the profile, will be determined by sensitively detecting the tangent position of the two tangents (SNT, SST) and then calculating the arc size or else by means of trigonometric functions.

19. Method according to claim 12, **characterised in that** the angle of incidence (β), which is enclosed by a laser beam direction axis (LSRA1, LSRA2) of the individual laser beam (15, 16) and a direction axis (RA) running parallel to the surface region of the profile, will be determined by sensitively detecting the axis positions and then calculating the arc size or else by means of trigonometric functions.

20. Method according to claim 12, **characterised in that** a smooth sheet-metal shell (10) is prepared instead of the profile and a stringer (11) is prepared instead of the joining partner at the start of the subsequent laser welding process.

## Revendications

1. Agencement de régulation de la position de cordon d'un profilé assemblé au rayon laser, les éléments à assembler, où la face frontale d'un élément à assembler rejoint à angle droit la surface du profilé, étant réunis, de part et d'autre de l'élément à assembler, sur les bords au niveau du joint de soudure (12), par deux cordons de soudure au laser (13, 131) réalisés chacun par un rayon laser (16, 17), pour obtenir un élément soudé, agencement qui est constitué de plusieurs composants d'installation disposés en série, reliés sur le plan informatique et comprenant un composant de position de cordon (1), destiné à modifier la position du cordon (NL), et un composant de processus de soudage au laser (2), doté de deux sources de soudage au laser (14, 15) intégrées, pour réaliser le cordon de soudure au laser (13, 131) individuel, et auquel agencement sont intégrés un dispositif de régulation de position de cordon (3), dont la sortie (31) est reliée sur le plan informatique au composant de position de cordon (1), ainsi qu'un dispositif capteur (4), ce dernier étant installé directement sur le composant de processus de soudage au laser (2) ou à proximité de celui-ci, lequel est disposé de manière à suivre les sources de soudage au laser (14, 15), se déplaçant horizontalement à la vitesse de soudage, et est relié sur le plan informatique au dispositif de régulation de position de cordon (3) qui reçoit à une première entrée (32) les informations de capteur (A) converties en signaux, agencement dans lequel le dispositif de régulation de position de cordon (3) est équipé d'un circuit (S) interne, qui est réalisé par combinaison de plusieurs composants de circuit connectés sur le plan fonctionnel, et le circuit (S) est apte à effectuer une comparaison des informations de capteur (A), acheminées en continu pendant l'opération de soudage et reçues de l'extérieur du circuit, avec une information de grandeur de consigne (B) et, après cette comparaison d'informations, à générer, à partir du résultat de la comparaison, une grandeur réglante (D) pour les paramètres du processus, laquelle grandeur est fournie à la sortie (31) du dispositif de régulation de position de cordon (3) et est transmise au composant de position de cordon (1) à des fins de modification de la position du cordon (NL), **caractérisé en ce que** le dispositif capteur (4) est réalisé avec au moins un composant capteur (41, 42) pour mesurer un angle de flanc de cordon (α) du cordon de soudage au laser (13, 131) produit et que le dispositif de régulation de position de cordon (3) génère, à partir de la modification de l'angle de flanc de cordon (α), une grandeur réglante (D) pour réguler la position du cordon, la génération de cette grandeur réglante (D) comprenant une comparaison avec une information de grandeur de consigne (B) de l'angle de flanc de cordon (α).

2. Agencement selon la revendication 1, **caractérisé en ce qu'**une entrée (1A) du composant de position de cordon (1) est reliée sur le plan informatique à la sortie (31) du dispositif de régulation de position de cordon (3).

3. Agencement selon la revendication 1, **caractérisé en ce qu'**une ligne de transmission d'informations (5) est connectée à une deuxième entrée (33) du dispositif de régulation de position de cordon (3) et est utilisée pour transmettre l'information de grandeur de consigne (6) de l'angle de flanc de cordon (α), reçue de l'extérieur du circuit, et qu'en l'absence de cette information, une information de grandeur de consigne (C) enregistrée peut être appelée de façon interne au circuit, dans un composant de mémoire (34) installé de manière facultative dans le dispositif de régulation de position de cordon (3).

4. Agencement selon la revendication 1, **caractérisé en ce que** le circuit (S) du dispositif de régulation de position de cordon (3) comporte au moins un composant comparateur (35), destiné à comparer les informations de capteur (A), qu'il reçoit pendant l'opération de soudage, avec l'information de grandeur de consigne (B, C) correspondante, et un composant convertisseur (36) destiné à générer une grandeur réglante (D) pour modifier l'angle de flanc de cordon (α), qu'il génère à partir d'une information de résultat de comparaison (E) reçue du composant comparateur (35).

5. Agencement selon les revendications 1, 3 et 4, **caractérisé en ce que** le composant de mémoire (34) installé de manière facultative et/ou la deuxième entrée (33) du dispositif de régulation de position de cordon (3) sont reliés au composant comparateur (35), lequel est relié à la première entrée (32) du dispositif de régulation de position de cordon (3), une sortie (38) du composant comparateur (35) étant connectée à l'entrée du composant convertisseur (36) dont la sortie est reliée à la sortie (31) du dispositif de régulation de position de cordon (3).

6. Agencement selon la revendication 3, **caractérisé en ce que** la ligne de transmission d'informations (5) est connectée au composant comparateur (35).

7. Agencement selon les revendications 1 et 3 à 5, **caractérisé en ce que** le dispositif de régulation de position de cordon (3) comprend un composant de valeur seuil (37) qui est relié au composant comparateur (35) et peut être connecté et qui, en cas d'interruption de la présentation de l'information de grandeur de consigne (B) reçue de l'extérieur du circuit, via la ligne de transmission d'informations (5), établit, au moyen d'une information de valeur seuil (SI), la liaison informatique du composant de mémoire (34) vers le composant comparateur (35), à la suite de quoi ce dernier reçoit l'information de grandeur de consigne (C) mémorisée.

8. Agencement selon la revendication 1, **caractérisé en ce que** le dispositif capteur (4) comprend deux composants capteurs (41, 42) qui sont disposés à proximité de chaque cordon de soudure au laser (13, 131).

9. Agencement selon les revendications 1 et 8, **caractérisé en ce que** les composants capteurs (41, 42) sont reliés à une autre ligne de transmission d'informations (6) qui est utilisée par les deux capteurs et par l'intermédiaire de laquelle ceux-ci fournissent les informations de capteur (A) recueillies, ladite ligne de transmission d'informations (6) supplémentaire étant connectée à la première entrée (32) du dispositif de régulation de position de cordon (3).

10. Agencement selon les revendications 1 et 8 à 9, **caractérisé en ce que** les composants capteurs (41, 42) sont réalisés à l'aide d'un capteur à coupe optique qui détecte optiquement la géométrie de chaque cordon de soudure au laser (13, 131), sur le bord du joint de soudure (12).

11. Agencement selon la revendication 1, **caractérisé en ce que** le dispositif de régulation de position de cordon (3) est un régulateur unidirectionnel réalisé sous forme de régulateur proportionnel ou différentiel.

12. Procédé de régulation de la position de cordon d'un profilé assemblé au rayon laser en utilisant l'agencement de la revendication 1, procédé selon lequel les éléments à assembler, où la face frontale de l'élément à assembler est disposée à angle droit et dans le joint de soudure (12) sur la surface du profilé, sont d'abord préparés pour le processus subséquent de soudage au laser, puis la position de deux sources de rayon laser (14, 15) est ajustée par le composant de position de cordon
(1) avec une grandeur réglante (D) pour la modification de l'angle de flanc de cordon (α), qui correspond à une information de grandeur de consigne (B, C) de l'angle de flanc de cordon (α), puis le profilé et l'élément à assembler sont réunis sur le bord du joint de soudure (12) par deux cordons de soudure au laser (13, 131) réalisés respectivement avec un rayon laser (16, 17), chaque rayon laser (16, 17) étant orienté avec un angle d'incidence (β) sur la zone de bord du joint de soudure (12), par une source de rayon laser (14, 15) qui est déplacée à la vitesse de soudage, à proximité de la face latérale verticale de l'élément à assembler et sur le côté du joint de soudure (12), **caractérisé en ce qu'**il comprend les étapes suivantes, selon lesquelles
a) la grandeur réelle de l'angle de flanc de cordon (α) est ensuite mesurée par exploration optique par le dispositif capteur (4) qui suit à la vitesse de soudage et convertit cette grandeur en signaux d'information de capteur (A), lesquels sont ensuite transmis par voie informatique par le dispositif capteur (4) au dispositif de régulation de position de cordon (3);
b) l'information de capteur (A) convertie en signaux est ensuite comparée à l'aide de moyens informatiques par le dispositif de régulation de position de cordon (3) avec une information de grandeur de consigne (B) reçue de l'extérieur ou une information de grandeur de consigne (C) mémorisée de façon interne, afin de déterminer ensuite, à partir des informations comparées, une information de résultat de comparaison (E), sur la base de laquelle le dispositif de régulation de position de cordon (3) génère la grandeur réglante (D) et la transmet par des moyens informatiques au composant de position de cordon (1);
c) le composant de position de cordon (1) procède ensuite à une correction de la position des deux sources de rayon laser (14, 15), en déplaçant leur position initiale dans une direction d'axe de correction dans l'espace tridimensionnel, ce qui a pour effet de modifier la position d'entrée de chaque rayon laser (16, 17) dans la zone de bord du joint de soudure (12) et de modifier ainsi l'angle de flanc de cordon (α), dans la mesure où suite à la détermination de l'information de résultat de comparaison (E) de l'étape b), un écart de l' information de capteur (A) par rapport à l'information de grandeur de consigne (B) est signalé.

13. Procédé selon la revendication 12, **caractérisé en ce que**, après le positionnement des éléments à souder et avant le début du processus de soudage au laser, le joint (12) de ces éléments est exploré par voie optique par le dispositif capteur (4) pour en déduire la prédéfinition de valeur de l'information de grandeur de consigne (B, C) transmise ou mémorisée.

14. Procédé selon la revendication 12, **caractérisé en ce que** différentes informations de grandeurs perturbatrices, qui exercent une influence sur le processus de soudage au laser, au cours de celui-ci, et notamment aussi sur la valeur réelle de l'angle de flanc de cordon (α), sont transmises au dispositif de régulation de position de cordon (3) et, en cas d'absence de la mesure par capteur de l'angle dé flanc de cordon (α) pendant le processus de soudage, sont utilisées à la place de l'information de capteur (A) convertie en signaux, pour effectuer la comparaison avec les informations de grandeur de consigne (B, C).

15. Procédé selon la revendication 12, **caractérisé en ce que** la modification de l'angle d'incidence (β) du rayon laser (16, 17) individuel permet d'obtenir, sur le plan de la technique de soudage, un angle de flanc de cordon (α) dont la plage de tolérance angulaire est comprise entre 40° et 50°.

16. Procédé selon la revendication 12, **caractérisé en ce que** la position de cordon (NL) est déterminée par mesure par capteur d'une distance (AS) qui est mesurée sur une tangente de l'élément à assembler qui est verticale et placée contre l'élément non soudé au laser, la distance (AS) étant délimitée par un point d'entrée de rayon laser (LEP), par lequel le rayon laser (16, 17) individuel pénètre dans l'élément à assembler non soudé, et un point d'intersection de joint de soudure (SSP), par lequel passe une tangente de joint de soudure (SST) qui est placée contre la zone de surface du profilé, dans la région du joint de soudure (12).

17. Procédé selon la revendication 16, **caractérisé en ce que**, suivant l'épaisseur de l'élément à assembler par soudage, la position de cordon (NL) se situera dans une plage de tolérance comprise entre +0,3 mm et +0,5 mm.

18. Procédé selon la revendication 12, **caractérisé en ce que** l'angle de flanc de cordon (α), qui est formé par une tangente de cordon de soudure (SNT), placée contre la partie supérieure du cordon (13, 131) individuel, et la tangente de joint de soudure (SST), placée contre la zone de surface du profilé, dans la région du joint de soudure (12), est déterminé par exploration par capteur de la position des deux tangentes (SNT, SST) et calcul subséquent de la mesure d'arc ou selon des fonctions trigonométriques.

19. Procédé selon la revendication 12, **caractérisé en ce que** l'angle d'incidence (β), qui est formé par un axe directionnel de rayon laser (LSRA1, LSRA2) du rayon laser (16, 17) individuel et un axe directionnel (RA) parallèle à la zone de surface du profilé, est déterminé par exploration par capteur des positions des axes et calcul subséquent de la mesure d'arc ou selon des fonctions trigonométriques.

20. Procédé selon la revendication 12, **caractérisé en ce que**, à la place du profilé et de l'élément à assembler, on prépare respectivement une coque en tôle lisse (10) et un raidisseur (11) pour le processus de soudage au laser subséquent.
